# EUROPEAN PATENT SPECIFICATION

(11) **EP 2 458 106 B1**
(45) Date of publication and mention of the grant of the patent: **10.01.2018**
(21) Application number: 11188556.2
(22) Date of filing: 10.11.2011
(51) Int. Cl.: E04D 12/00, E04D 13/00, G01M 3/16

(54) **Device for verifying and controlling the performance characteristics of a roof**
Vorrichtung zur Überprüfung und Kontrolle der Leistungsmerkmale eines Dachs
Dispositif de vérification et de contrôle des caractéristiques de performance d'un toit

(30) Priority: 26.11.2010 IT TV20100151
(43) Date of publication of application: 30.05.2012
(73) Proprietor: Silcart S.p.A., 31030 Carbonera, Frazione Mignagola TV (IT)
(72) Inventor: Faotto, Ugo, 31100 TREVISO (IT)
(74) Representative: Modiano, Micaela Nadia

(56) References cited:
- WO-A-91/10889
- WO-A-94/12736
- WO-A1-2009/023956
- DE-A1- 3 011 500
- US-A- 4 965 554
- US-A1- 2007 046 481

## Description

The present invention relates to a device for verifying and controlling the performance characteristics of a roof.

Nowadays it is known to provide roofs the covering layer of which is constituted by gutter tiles or cover tiles or roofing tiles having various shapes.

The roof can be of the ventilated type, and therefore have a frame for supporting the covering layer which defines at least one ventilation chamber with respect to an underlying surface or loft slab which is constituted by wood boards or by a casting of concrete or other material.

One great problem that affects all roofs consists in that even small water infiltrations can entail over time severe damage to the underlying structure, with the consequent need for onerous, expensive and time-consuming repair interventions.

The infiltration in fact becomes evident only when the damage that it causes has already been caused.

As a partial solution to this drawback, it is known to use sheaths which are placed between the covering layer and the loft slab; the sheaths can be of the fully impermeable type or such as to constitute vapor barriers.

However, even these solutions have the same drawback noted above due to the deterioration over time of their insulation characteristics or due to accidental piercing thereof even during roof laying.

Furthermore, for all the solutions described above the problem caused by an infiltration forces the user to remove most or all of the covering layer to ensure that the damage has been repaired, even if the damage is small and localized.

Finally, it is noted that the first cause of roof and/or home fire is the malfunction of the flue, and that the fire becomes evident only when the damage that it causes has already been caused.

WO 91/10889 A discloses a sealing film with an electric measuring instrument for detecting leaks in the film, which can be used for various purposes, for example for the sealing of buildings, especially flat roofs, water tanks, dam structures or landfills, particularly toxic waste dumps. An assemblage of measuring loads, which can be connected individually or in groups to a measurement device and are arranged at a distance apart, is arranged on both sides of the film. The measuring loads of one of the assemblages cross the measuring loads of the other assemblage at right angles. Each of the measuring loads of one assemblage can be connected after each of the measuring loads of the other assemblage to the measurement device in order to test the insulation resistance at the individual points of intersection. A leak exists at a point of intersection if the insulation resistance at that point of intersection is small in comparison with the insulation resistance at the other points of intersection.

WO 2009/023956 A1 discloses a membrane wherein a leak in the membrane on top of a horizontal roof deck is located by applying conductive wires on the membrane underneath the aggregate in a grid pattern. A measuring and switching circuit generates voltage having a positive attached to the roof deck and a negative attached to the wires. The circuit has a relay for each wire which can be switched between a current sensor system and the negative potential. The sensor system is arranged to sense at each of the wires in turn the current flowing from the roof deck through any leak in the membrane to the wire. A microprocessor operates the relays in turn to connect all the other wires to the negative as a shield while each wire is sensed. From the output of the grid the changes in current in the x and y directions are analyzed to locate the leak in the membrane. Document WO 91/10889 A discloses all the features of the preamble of claim 1. The aim of the present invention is to solve the above-mentioned technical problems, eliminating the drawbacks of the cited background art, by providing a device that provides an indication regarding the state of health of a roof.

Within this aim, an object of the invention is to provide a device that makes it possible to achieve supervision and control of the performance characteristics of the roof.

Another object of the invention is to make it possible to verify rapidly and simply any deterioration of the roofing of a building.

A further object of the invention is to provide a device that allows timely intervention on the roof and avoids loss of effectiveness of the thermal insulation and/or of its waterproofness.

Another object is to obtain a device that makes it possible to avoid the need to access the roof to perform the checks that are necessary to assess its state of health.

Another object of the invention is to make it possible to achieve energy saving and environmental protection by maintaining good thermal insulation properties for the roofing.

Another object is to provide a device that can be integrated within domotics, an interdisciplinary science that deals with the study of the technologies adapted to improve the quality of life of the home.

Another object is to detect any leak of gas, to give an immediate acoustic and/or sound and/or GSM-relayed and/or domotics-integrated alarm and thus allow timely intervention.

Another object of the invention is to be structurally simple and have low production costs.

In accordance with the invention, to achieve this aim and these objectives there is provided a device for verifying and controlling the performance characteristics of a roof as defined in the appended claims.

Further characteristics and advantages of the invention will become better apparent from the detailed description of a particular embodiment, illustrated by way of nonlimiting example in the accompanying drawings, wherein:

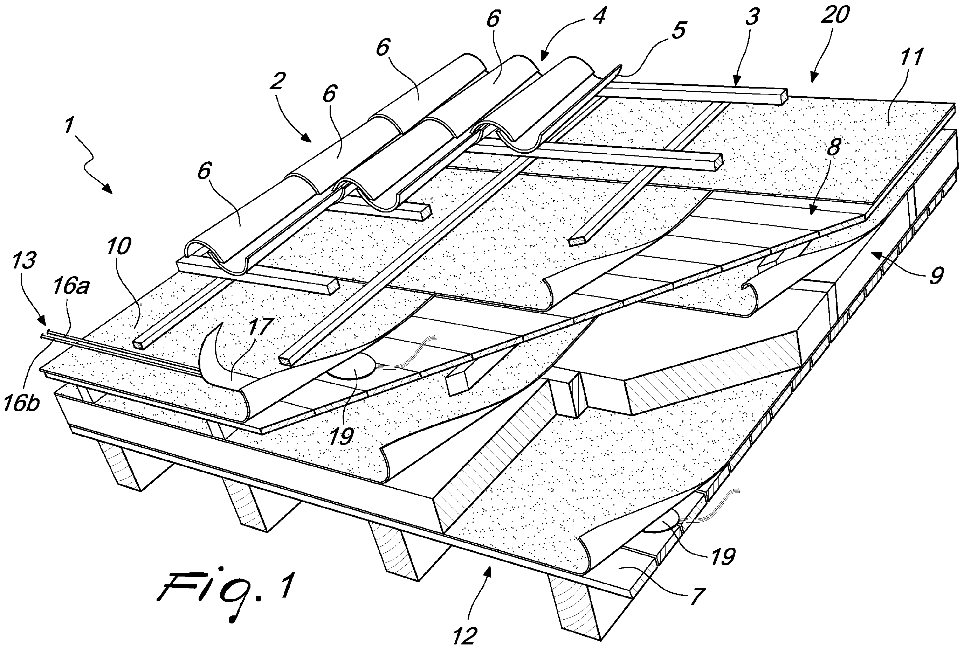

Figure 1 is a schematic view of the device according to the invention applied to a particular type of roof;

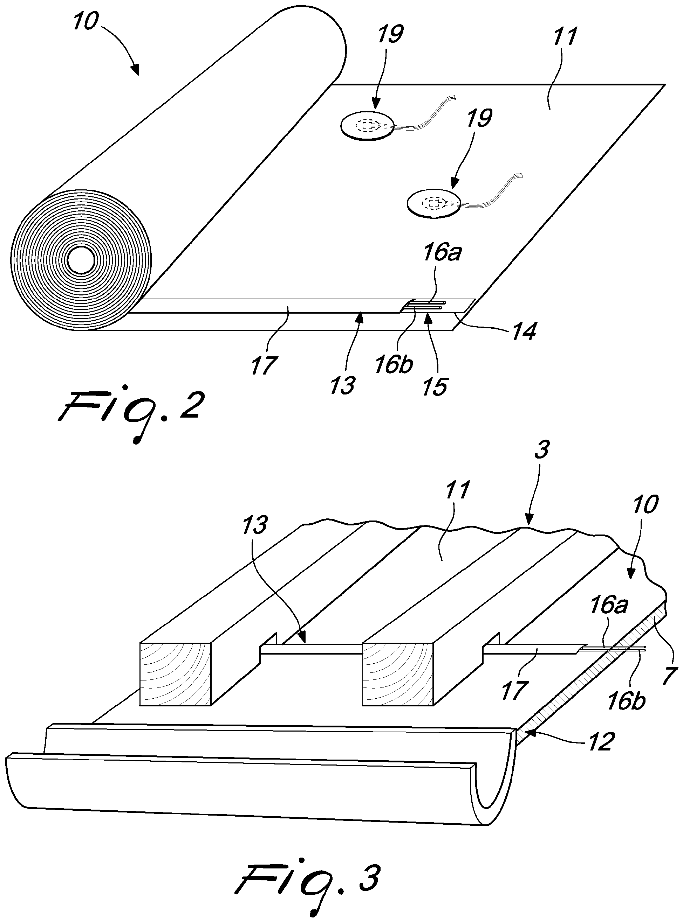

Figure 2 is side perspective view of the sheet;
Figure 3 is a view of another particular application of the device according to the invention to a roof;

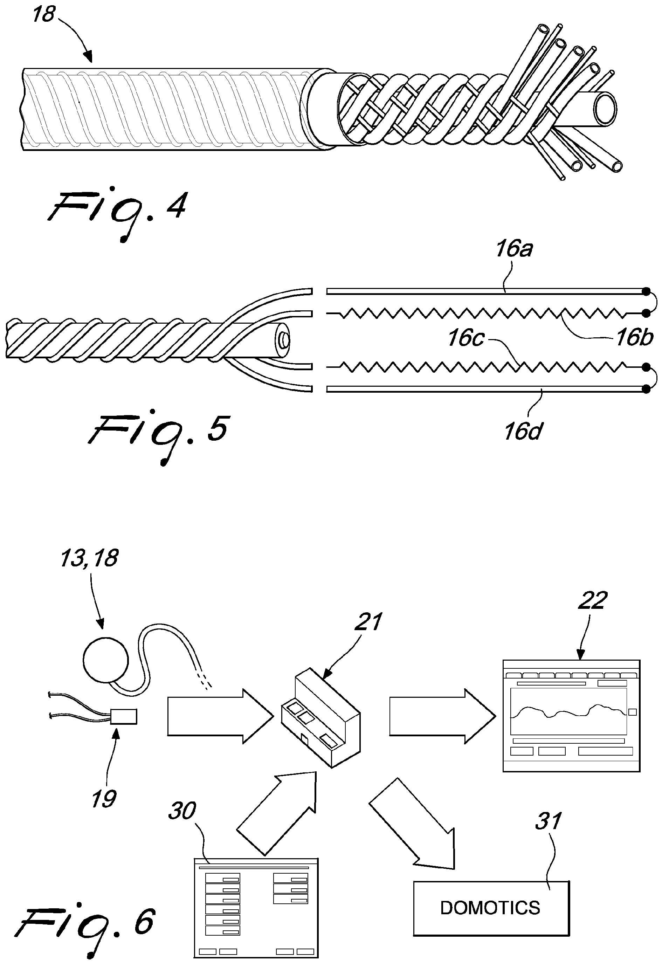

Figures 4 and 5 are views of a four-wire cable which is wound and partially open;
Figure 6 is a diagram for the use of the device in the field of domotics;

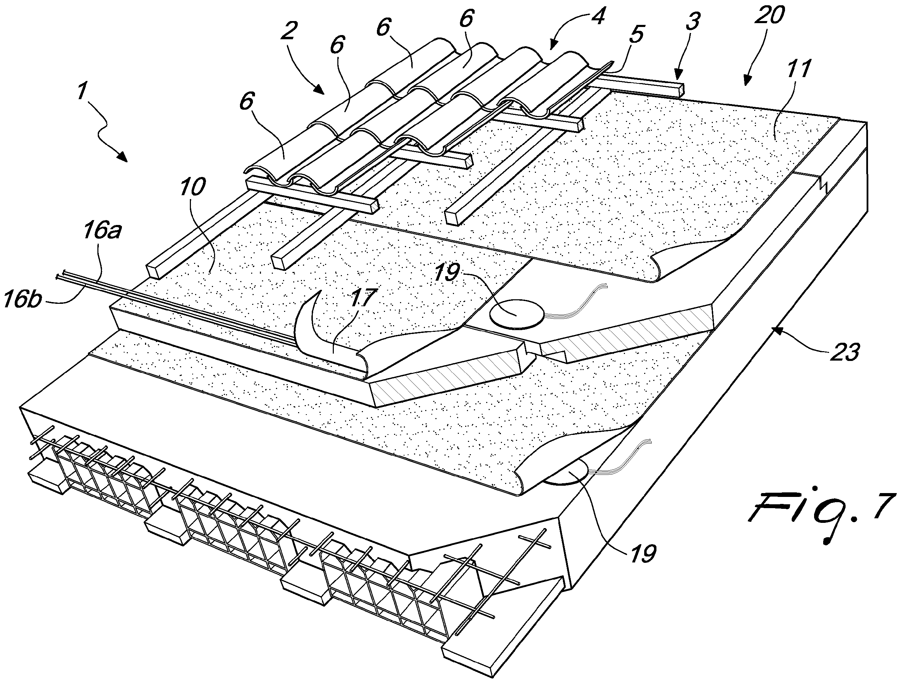

Figure 7 is a view of the device applied to a different type of roof;
Figure 8 is a view of a different embodiment for the first band;
Figures 9 and 10 are views of another embodiment for the first band respectively in an upper and lower view of the faces.

With reference to the figures, the reference numeral 1 designates a device for verifying and controlling the performance characteristics of a roof, which is generally designated by the reference numeral 2.

The roof 2 can be of the ventilated type and therefore have a frame 3 made of wood or plastic material or metal or composite materials for supporting the covering layer 4, which is provided by means of gutter tiles 5 and cover tiles 6.

The frame 3, or directly the covering layer 4, rests on an underlying surface 7, or on a loft slab 23; in the first case, the surface 7 is constituted by wood planks and in the second case it is constituted by a casting of concrete or other material; the frame 3 or the covering layer 4 can also rest on an intermediate surface 8 which is arranged above the surface 7 or a layer 9 of insulating material.

The device is constituted by at least one sheet 10, which can be applied at the roof 2 below the covering layer 4.

The sheet 10 has, on the surface 11 that is directed toward the covering layer 4 and in the region adjacent to the eaves 12 at least one means 13 that is adapted to detect the presence of an infiltration of water.

The means 13 are constituted according to this invention by a first adhesive band 14 which is applied to the surface 11 of the sheet 10; a flat cable 15 of the type with two wires 16a, 16b is arranged on the first band 14 and detects water leaks by utilizing, with a resistive measurement, the conductivity itself of the fluid.

The flat cable 15 is then fixed by means of a second band 17 to the first band 14.

A hook and loop fastener material can be used for the first and second bands.

A cable 18 with four wires 16a, 16b, 16c, 16d, is thus used which, arranged proximate to the gutter line 12, enables to detect a water infiltration by utilizing, with a resistive measurement, the conductivity of the fluid and thus report the presence of water with an optional immediate acoustic and/or sound alarm. Preferably the sheet 10 further comprises one or more temperature and/or humidity sensors or probes 19 which are arranged in the direction of the ridge 20 of the roof 2 and are meant to measure variations in temperature and/or relative humidity and/or to detect gas and thus assess the health of the roof 2, the efficiency of the insulation used and to prevent any fires and/or the presence of gas on the roof 2.

One or more of the one or more sensors or probes 19 can also be arranged at the intermediate surface 8 or at the surface 7 and/or in a region that is adjacent to the flue and/or in a region that is adjacent to the gutter frame 12.

The sensors or probes 19 also can be associated with the sheet 10 as indicated for the means 13.

The device 1 is used in combination with a programmable logic controller 21 with a dedicated software 30, with the following functions: detecting the data acquired by the sensor system, which comprises the means 13 and the sensors 19 in addition to others which are available for example for home management, storing the acquired information, processing it by means of an adapted software 22 and making the data available to the software interface for monitoring.

The data can then be logged daily for the current month and, at the end of the period, a single logging based on the average of the period is performed.

The software 22 is provided to the end customer upon supply of the hardware system and can be provided for example on a Windows platform and in multilanguage mode, and it can make available to the customer the main information related to the performance of his covering and can provide some historical/statistical indications.

For correct operation, the software 22 can be installed by the customer on any personal computer provided with a Windows operating system and connected over a network to the reference programmable logic controller 21.

All the data can thus be gathered in an open-source control unit, which, being provided with an internal Web server, can be accessed from any personal computer (home, office, ...) and can send, in case of alarm, signals directly to a mobile telephone.

The control unit, furthermore, can be connected to the domotics of the home with interfaces which are also open to other users besides the ones listed (for example, air speed, barometric pressure, brightness, ...).

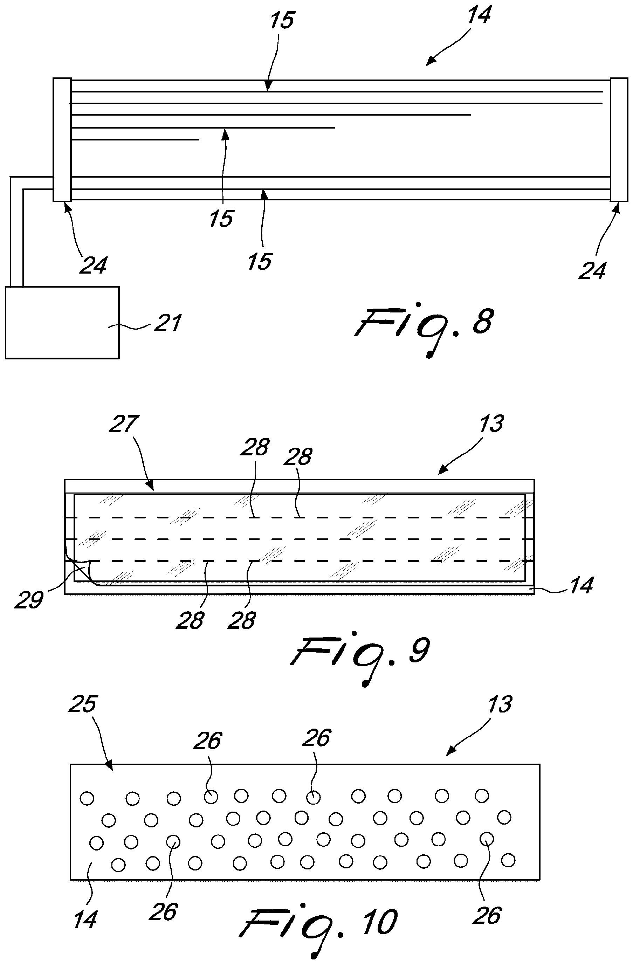

As shown in Figure 8, as an alternative the means 13 is constituted by a first multilayer (sandwich) adhesive band 14 of breathable fabric which is applied to the surface 11 of the sheet 10, multiple flat cables 15 adapted to detect the presence of water, the presence of humidity and relative or absolute temperatures being arrangeable on the first band 14; at at least one end of the first band 14 a vulcanized rubber connector 24 is provided for supplying power and transmitting data to the centralized logic unit and/or to the programmable logic controller 21.

The control unit can contain an electronic board, a SELV (Safety Extra Low Voltage) safety power supply, power supply cables and electrodes (copper ribbon and/or wires); as regards the electronic board, the power supply voltage is 24 V DC (volts direct current), while the absorption current is limited to the maximum value of 50 mA (50 milliamperes).

The electronic board is accommodated within a plastic enclosure made of self-extinguishing material and is completely embedded in self-extinguishing resin.

The resin is meant to protect the electronic board against atmospheric agents (water, dust, etc.) and to ensure that flames do not propagate if they form inside or outside the device.

The electronic board, protected in the enclosure as described, is fixed to the decking of the roof.

As regards the SELV (Safety Extra Low Voltage) safety power supply, it provides the 24 V DC (volts direct current) supply voltage required for the operation of the electronic board.

The SELV safety power supply has insulation class II (class 2) is protected in output against permanent short-circuits, overvoltages, excessive temperatures, and limits the delivered current to the maximum value of 60 mA (60 milliamperes).

The safety power supply is installed within the home and is supplied by the 230 V AC (volts alternating current) mains voltage of the electrical system in compliance with electrical system standards.

The power supply cables that connect the safety power supply to the electronic board have three shielded conductors with a minimum cross-section of 0.5 mm² (0.5 square millimeters), category I insulation class, with an insulation voltage of the sheath of at least 3000 V, non-propagating, halogen-free, with low emission of toxic and corrosive fumes and gases, suitable for installation even in wet environments and outdoors. The power supply cables are fixed to the decking of the roof. The maximum length of the power supply cables is 300 m.

As regards the electrode section, it is powered by the electronic board at a value of 5 V AC (volts alternating current), with an absorption current which is limited to the maximum value of 10 mA (10 milliamperes).

There is a 6-volt Zener barrier which ensures that the maximum voltage value across the electrodes never exceeds the value of 6 volts. The electrodes are fixed to the sheet.

As shown in Figures 9 and 10, the means 13 adapted to detect the presence of a water infiltration is constituted by a first band 14 which is provided by means of a conducting tape which is associated with the surface 11 of the sheet 10.

The conducting tape has, on the lower face 25, as shown in Figure 10, a plurality of regions 26 of adhesive in spot form; the spot adhesive coating ensures the conductivity of the material and allows connection to the surface 11; this connection is improved, or obtained even without the regions 26, if beams arranged above the conducting tape are used.

A series of conducting wires 28 is sewn only on the upper surface 27 of the conducting tape and the wires are provided consecutively with a portion which is external to the upper surface 27 and a portion which is internal thereto.

Therefore, the series of conducting wires 28 does not pass through the thickness of the conducting tape.

Furthermore, a protective liner 29 is used which is arranged temporarily to cover and protect the conducting wires 28.

The conducting tape is bonded with adhesive directly on the sheet 10; once the conducting tape has been connected to the electronic part, the protective liner 29 is then removed.

It has thus been found that the invention has achieved the intended aim and objects, a device having been obtained which supervises and controls the performance characteristics of the roof, making it possible to detect, store and make available a series of physical values that are measured within the roofing area in order to assess constantly its performance and reveal its malfunction.

Furthermore, the device, due to its implementation with a software configuration system, allows a third-party operator to be fully autonomous in the step of installation and configuration.

The device thus enables to constitute a sort of warning system which indicates the leakage of water without having to perform beforehand and with a certain frequency a monitoring of the roof, with a consequent significant economic advantage.

A damage prevention system is thus obtained since the laying of the sheet 10, with a modest cost, keeps the state of health of the roof monitored constantly.

The detection and reporting of anomalies in the roof enables to intervene immediately and avoid losses of effectiveness of the thermal insulation, since the system reports in advance the leakage of water of the first covering element.

The device also solves the problem of the danger of accessing the roof for verifications: the signal arrives without requiring verification on the part of a person.

Moreover, considerable energy saving and environmental protection is achieved, since the gathered data make it possible to understand whether the covering has good thermal insulation properties or whether modifications are required in the prospect of saving on the heating/air-conditioning costs of the building.

The materials used, as well as the dimensions that constitute the individual components of the invention, may of course be more pertinent according to the specific requirements. The various means for performing certain different functions need not certainly coexist only in the illustrated embodiment.

The characteristics indicated as advantageous, convenient or the like may also be omitted or be replaced with equivalents.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. A device (1) for verifying and controlling the performance characteristics of a roof (2) is provided, said device (1) being constituted by at least one sheet (10), which can be applied at said roof (2) below the covering layer (4)
**characterized in that** said device (1), in said roof (2) comprising a frame (3) and a covering layer (4) provided by means of gutter tiles (5) and cover tiles (6) and supported by the frame (3) has a surface (11) directed toward said covering layer (4), said device having on said surface (11) and at least in the region that is adjacent to the eaves (12), at least one means (13) adapted to detect the presence of an infiltration of water, said means (13) being provided with at least two wires, said detection of the presence of an infiltration of water being provided by a resistive measurement between said wires.

2. The device according to claim 1, **characterized in that** on said at least one sheet (10) or on said roof (2) in the direction of the ridge (20) of said roof (2) and/or in a region which is adjacent to the flue and/or in a region which is adjacent to the eaves (12), one or more temperature and/or humidity and/or gas detection sensors or probes (19) are provided.

3. The device according to claim 2, **characterized in that** said at least one means (13) and said one or more sensors (19) are connected to a centralized logic unit and/or to programmable logic controller (21), which are adapted to warn the user and/or detect and/or monitor and/or warn of the presence of water infiltrations and variations in the temperature and/or humidity and/or the presence of gas on said roof (2).

4. The device according to claim 3, **characterized in that** said means (13) is constituted by a first adhesive band (14), which is applied to said surface (11) of said sheet (10), on said first band (14) a flat cable (15) of the type with two wires (16a, 16b) being provided, which detects water leaks by utilizing, with a resistive measurement, the conductivity of the fluid.

5. The device according to claim 4, **characterized in that** said flat cable (15) is fixed by means of a second band (17) to said first band (14), said interconnection occurring preferably by using a hook and loop fastener material

6. The device according to claim 3, **characterized in that** said means (13) is constituted by detection devices of the known type, such as a water detector adapted to detect the leakage of fluids of the type used in the oil sector to indicate petrol leaks.

7. The device according to claim 3, **characterized in that** said means (13) is constituted by a cable (18) with four wires (16a, 16b, 16c, 16d), which is arranged proximate to the gutter line (12) and makes it possible to detect an infiltration of water by utilizing, with a resistive measurement, the conductivity of the fluid and thus report, with an optional immediate acoustic and/or sound alarm, the presence of water.

8. The device according to one or more of the preceding claims, **characterized in that** on said sheet (10) or roof (2) one or more temperature and/or humidity and/or gas detection sensors or probes (19) are provided, which are arranged in the direction of said ridge (20) of the roof (2) and/or in a region which is adjacent to the flue and/or in a region which is adjacent to the eaves (12), and have the purpose of measuring temperature and/or relative humidity variations in order to assess the health of the roof (2) and the efficiency of the thermal insulation used and/or the presence of gas.

9. The device according to one or more of the preceding claims, **characterized in that** it is associated with a software (22) which is installed on a PC and is connected over a network to said programmable logic controller (21), which gathers the data in an open source control unit provided with an internal web server, said control unit being connectable to the domotics of the home with interfaces which are open to other users as well.

10. The device according to claim 3, **characterized in that** said means (13) is constituted by a first multilayer (sandwich) adhesive band (14) made of breathable fabric which is applied to said surface (11) of said sheet (10), multiple flat cables (15) being arranged on said first band (14) and being adapted to detect the presence of water, the presence of relative or absolute humidity and temperature, at at least one end said first band (14) having a vulcanized rubber connector (24) for supplying power and for transmitting data to a centralized logic unit and/or to a programmable logic controller (21).

11. The device according to one or more of the preceding claims, **characterized in that** said means (13) adapted to detect the presence of a water infiltration is constituted by a first band (14) provided by means of a conducting tape, which is associated with said surface (11) of said sheet (10) and is provided, on its lower face (25), with a plurality of regions (26) of adhesive in spot form, a series of conducting wires (28) being sewn only on the upper surface (27) of said conducting tape and being provided consecutively with a portion which is external to said upper surface (27) and one which is internal thereto.

12. The device according to claim 11, **characterized in that** a protective liner (29) is applied temporarily on said conducting tape and is temporarily arranged so as to cover and protect said conducting wires (28).

## Patentansprüche

1. Eine Vorrichtung (1) zum Überprüfen und Steuern der Leistungseigenschaften eines Dachs (2) wird bereitgestellt, wobei die Vorrichtung (1) aus mindestens einer Schicht (10) besteht, die auf dem Dach (2) unter der Abdeckschicht (4) angebracht werden kann,
**dadurch gekennzeichnet, dass** die Vorrichtung (1) in dem Dach (2), das einen Rahmen (3) und eine Abdeckschicht (4) umfasst, die von Hohlpfannen (5) und Ziegeldeckungen (6) gebildet und vom Rahmen (3) getragen wird, eine Oberfläche (11) hat, die zu der Abdeckschicht. (4) hin gerichtet ist, wobei die Vorrichtung auf der Oberfläche (11) und mindestens in dem Bereich, der an die Dachrinne (12) angrenzt, mindestens ein Mittel (13) hat, das ausgebildet ist, um die Anwesenheit eines Eindringens von Wasser zu erfassen, wobei das Mittel (13) mit mindestens zwei Drähten ausgestattet ist, wobei die Anwesenheit eines Eindringens von Wasser durch eine Widerstandsmessung zwischen den Drähten erfasst wird.

2. Die Vorrichtung gemäß Anspruch 1, **dadurch gekennzeichnet, dass** sich auf der mindestens einen Schicht (10) oder auf dem Dach (2) in der Richtung des Firsts (20) des Dachs (2) und/oder in einem Bereich, der an den Rauchzug angrenzt, und/oder in einem Bereich, der an die Dachrinne (12) angrenzt, ein(e) oder mehrere Temperatur- und/oder Feuchtigkeits- und/oder Gaserkennungssensoren oder -sonden (19) befinden.

3. Die Vorrichtung gemäß Anspruch 2, **dadurch gekennzeichnet, dass** das mindestens eine Mittel (13) und die einen oder mehreren Sensoren (19) mit einer zentralen Logikeinheit und/oder mit einer speicherprogrammierbaren Steuerung (21) verbunden sind, die ausgebildet sind, um den Benutzer zu warnen und/oder um die Anwesenheit des Eindringens von Wasser und Schwankungen der Temperatur und/oder Feuchtigkeit und/oder die Anwesenheit von Gas auf dem Dach (2) zu erkennen und/oder zu überwachen und/oder davor zu warnen.

4. Die Vorrichtung gemäß Anspruch 3, **dadurch gekennzeichnet, dass** das Mittel (13) aus einem ersten Klebeband (14) besteht, das auf die Oberfläche (11) der Schicht (10) aufgebracht wird, wobei auf dem ersten Band (14) ein Bandkabel (15) vom Typ mit zwei Drähten (16a, 16b) angebracht ist, das Wasserlecks erkennt, indem es mit einer Widerstandsmessung die Leitfähigkeit des Fluids nutzt.

5. Die Vorrichtung gemäß Anspruch 4, **dadurch gekennzeichnet, dass** das Bandkabel (15) mit Hilfe eines zweiten Bandes (17) an dem ersten Band (14) befestigt ist, wobei die Befestigung vorzugsweise mit Hilfe eines Klettverschluss-Befestigungsmaterials durchgeführt wird.

6. Die Vorrichtung gemäß Anspruch 3, **dadurch gekennzeichnet, dass** das Mittel (13) aus Erfassungsvorrichtungen von bekanntem Typ besteht, wie zum Beispiel einem Wasserdetektor, der ausgebildet ist, um die Leckage von Fluiden zu erkennen, von dem Typ, der im Ölsektor verwendet wird, um Benzinlecks anzuzeigen.

7. Die Vorrichtung gemäß Anspruch 3, **dadurch gekennzeichnet, dass** das Mittel (13) aus einem Kabel (18) mit vier Drähten (16a, 16b, 16c, 16d) besteht, das nahe der Dachrinne (12) angeordnet ist und es ermöglicht, ein Eindringen von Wasser zu erkennen, indem mit Hilfe einer Widerstandsmessung die Leitfähigkeit des Fluids genutzt wird, und so mit einem fakultativen sofortigen akustischen und/oder Tonalarm die Anwesenheit von Wasser zu melden.

8. Die Vorrichtung gemäß einem oder mehreren der obigen Ansprüche, **dadurch gekennzeichnet, dass** sich auf der Schicht (10) oder dem Dach (2) ein(e) oder mehrere Temperatur- und/oder Feuchtigkeit- und/oder Gaserkennungssensoren oder -sonden (19) befinden, die in der Richtung des Firsts (20) des Dachs (2) und/oder in einem Bereich, der an den Rauchzug angrenzt, und/oder in einem Bereich, der an die Dachrinne (12) angrenzt, angeordnet sind und die Aufgabe haben, Schwankungen in der Temperatur und/oder der relativen Feuchtigkeit zu messen, um die Gesundheit des Dachs (2) und die Effizienz der verwendeten Wärmeisolation und/oder die Anwesenheit von Gas zu bewerten.

9. Die Vorrichtung gemäß einem oder mehreren der obigen Ansprüche, **dadurch gekennzeichnet, dass** sie mit einer Software (22) verknüpft ist, die auf einem PC installiert ist, und über ein Netzwerk mit der speicherprogrammierbaren Steuerung (21) verbunden ist, welche die Daten in einer Open Source-Steuereinheit sammelt, die mit einem internen Webserver ausgestattet ist, wobei die Steuereinheit über Schnittstellen, die auch für andere Nutzer offen sind, mit der Hausautomation des Heims verbindbar ist.

10. Die Vorrichtung gemäß Anspruch 3, **dadurch gekennzeichnet, dass** das Mittel (13) aus einem ersten mehrschichtigen (Sandwich-)Klebeband (14) aus atmungsaktivem Textilerzeugnis besteht, das auf die Oberfläche (11) der Schicht (10) aufgebracht wird, wobei mehrere Bandkabel (15) auf dem ersten Band (14) angeordnet und ausgebildet sind, um die Anwesenheit von Wasser, die Anwesenheit relativer oder absoluter Feuchtigkeit und die Temperatur zu erfassen, wobei mindestens an einem Ende das erste Band (14) ein Stecker aus vulkanisiertem Gummi (24) zur Stromzufuhr und zur Datenübertragung an eine zentrale Logikeinheit und/oder an eine speicherprogrammierbare Steuerung (21) hat.

11. Die Vorrichtung gemäß einem oder mehreren der obigen Ansprüche, **dadurch gekennzeichnet, dass** das Mittel (13), das ausgebildet ist, um die Anwesenheit eines Eindringens von Wasser zu erkennen, aus einem ersten Band (14) besteht, das mit Hilfe eines leitenden Bandes bereitgestellt wird, welches mit der Oberfläche (11) der Schicht (10) verbunden und an seiner Unterseite (25) mit einer Vielzahl von Klebebereichen (26) in Punktform versehen ist, wobei eine Reihe leitender Drähte (28) nur auf die obere Oberfläche (27) des leitenden Bandes genäht und nacheinander mit einem Abschnitt versehen ist, der außerhalb der oberen Oberfläche (27) liegt, und einem Abschnitt, der innerhalb davon liegt.

12. Die Vorrichtung gemäß Anspruch 11, **dadurch gekennzeichnet, dass** vorübergehend eine Schutzeinlage (29) auf das leitende Band gelegt und vorübergehend so angeordnet wird, dass sie die leitenden Drähte (28) bedeckt und schützt.

## Revendications

1. Dispositif (1) de vérification et de contrôle des caractéristiques de performance d'un toit (2), ledit dispositif (1) étant constitué d'au moins une feuille (10) qui peut être appliquée sur ledit toit (2), sous la couche de couverture (4), **caractérisé en ce que** ledit dispositif (1), dans ledit toit (2) comprenant un cadre (3) et une couche de couverture (4) réalisée au moyen de tuiles creuses (5) et de tuiles de recouvrement (6) et supportée par le cadre (3), présente une surface (11) tournée en direction de ladite couche de couverture (4), ledit dispositif comportant, sur ladite surface (11) et au moins dans la région qui est adjacente à l'égout de toit (12), au moins un moyen (13) adapté pour détecter la présence d'une infiltration d'eau, ledit moyen (13) étant pourvu d'au moins deux fils, ladite détection de la présence d'une infiltration d'eau étant réalisée par une mesure par résistance entre lesdits fils.

2. Dispositif selon la revendication 1, **caractérisé en ce que** sur ladite feuille (10), au nombre d'au moins une, ou sur ledit toit (2), en direction du faîtage (20) dudit toit (2) et/ou dans une région qui est adjacente au conduit de cheminée et/ou dans une région qui est adjacente à l'égout de toit (12), un ou plusieurs capteurs ou sondes (19) de température et/ou d'humidité et/ou de détection de gaz sont prévus.

3. Dispositif selon la revendication 2, **caractérisé en ce que** ledit moyen (13), au nombre d'au moins un, et ledit ou lesdits capteur(s) (19) sont reliés à une unité logique centralisée et/ou à un automate programmable (21) qui sont adaptés pour alerter l'utilisateur et/ou pour détecter et/ou surveiller et/ou avertir de la présence d'infiltrations d'eau et de variations de température et/ou d'humidité et/ou de la présence de gaz sur ledit toit (2).

4. Dispositif selon la revendication 3, **caractérisé en ce que** ledit moyen (13) est constitué d'une première bande adhésive (14) qui est appliquée sur ladite surface (11) de ladite feuille (10), sachant qu'il est prévu sur ladite première bande (14), un câble plat (15) du type à deux fils (16a, 16b) qui détecte des fuites d'eau en utilisant, avec une mesure par résistance, la conductivité du fluide.

5. Dispositif selon la revendication 4, **caractérisé en ce que** ledit câble plat (15) est fixé au moyen d'une deuxième bande (17) à ladite première bande (14), ladite liaison réciproque étant de préférence établie en utilisant un crochet et un matériau de fixation à boucles et crochets.

6. Dispositif selon la revendication 3, **caractérisé en ce que** ledit moyen (13) est constitué de dispositifs de détection d'un type connu, par exemple d'un détecteur d'eau adapté pour détecter la fuite de fluides du type utilisé dans le domaine pétrolier pour indiquer des fuites de pétrole.

7. Dispositif selon la revendication 3, **caractérisé en ce que** ledit moyen (13) est constitué d'un câble (18) avec quatre fils (16a, 16b, 16c, 16d), qui est disposé à proximité de la ligne de gouttière (12) et permet de détecter une infiltration d'eau en utilisant, avec une mesure par résistance, la conductivité du fluide et signaler ainsi la présence d'eau, avec une alarme acoustique et/ou sonore immédiate facultative.

8. Dispositif selon une ou plusieurs des revendications précédentes, **caractérisé en ce qu'**il est prévu sur ladite feuille (10) ou le toit (2), un ou plusieurs capteurs ou sondes (19) de détection de température et/ou d'humidité et/ou de détection de gaz, qui sont disposés en direction dudit faîtage (20) du toit (2) et/ou dans une région qui est adjacente au conduit de cheminée et/ou dans une région qui est adjacente à l'égout de toit (12) et ont pour but de mesurer les variations de température et/ou d'humidité relative afin d'évaluer la santé du toit (2) et l'efficacité de l'isolation thermique utilisée et/ou la présence de gaz.

9. Dispositif selon une ou plusieurs des revendications précédentes, **caractérisé en ce qu'**il est associé à un logiciel (22) qui est installé sur un ordinateur personnel et est connecté via un réseau audit automate programmable (21) qui recueille les données dans une unité de commande à logiciel libre dotée d'un serveur web interne, ladite unité de commande pouvant être connectée au système domotique du logement, avec des interfaces qui sont également ouvertes à d'autres utilisateurs.

10. Dispositif selon la revendication 3, **caractérisé en ce que** ledit moyen (13) est constitué d'une première bande adhésive (14) multicouche (en sandwich) réalisée dans un matériau respirant qui est appliqué sur ladite surface (11) de ladite feuille (10), des câbles plats (15) multiples étant disposés sur ladite première bande (14) et étant adaptés pour détecter la présence d'eau, la présence d'une humidité ou d'une température relatives ou absolues, au moins une extrémité de ladite première bande (14) présentant un connecteur (24) en caoutchouc vulcanisé pour l'alimentation en courant et pour la transmission de données à une unité logique centralisée et/ou à un automate programmable (21).

11. Dispositif selon une ou plusieurs des revendications précédentes, **caractérisé en ce que** ledit moyen (13) adapté pour détecter la présence d'une infiltration d'eau est constitué d'une première bande (14) réalisée au moyen d'un ruban conducteur qui est associé à ladite surface (11) de ladite feuille (10) et est pourvu, sur sa face inférieure (25), d'une pluralité de régions (26) d'adhésif sous forme de points, une série de fils conducteurs (28) étant cousus uniquement à la surface supérieure (27) dudit ruban conducteur et étant pourvus successivement d'une partie qui est externe à ladite surface supérieure (27) et d'une partie qui est interne à celle-ci.

12. Dispositif selon la revendication 11, **caractérisé en ce qu'**un revêtement protecteur (29) est appliqué temporairement sur ledit ruban conducteur et est disposé temporairement de façon à recouvrir et protéger lesdits fils conducteurs (28).
